# EUROPÄISCHE PATENTSCHRIFT

(11) **EP 3 193 427 B1**
(45) Veröffentlichungstag und Bekanntmachung des Hinweises auf die Patenterteilung: **17.06.2020**
(21) Anmeldenummer: 17150643.9
(22) Anmeldetag: 09.01.2017
(51) Int. Cl.: H02J 13/00, H04L 12/12

(54) **SYSTEM ZUR ENERGIEVERSORGUNG UND STEUERUNG VON ANTRIEBEN**
SYSTEM FOR SUPPLYING ENERGY TO AN AND CONTROLLING DRIVES
SYSTÈME D'ALIMENTATION ÉLECTRIQUE ET COMMANDE D'ENTRAÎNEMENTS

(30) Priorität: 13.01.2016 DE 102016200277
(43) Veröffentlichungstag der Anmeldung: 19.07.2017
(73) Patentinhaber: GEZE GmbH, 71229 Leonberg (DE)
(72) Erfinder: Hucker, Dr., Matthias, 76359 Marxzell (DE); Schwesinger, Maik, 71106 Magstadt (DE)

(56) Entgegenhaltungen:
- DE-A1-102004 039 810
- DE-A1-102011 122 074
- DE-A1-102013 201 471
- DE-A1-102013 220 707
- BUSCH-JAEGER ELEKTRO GMBH: "CONTROLPANEL-EINKLAMGVONFUNKTIONUNDDESIGN ", INTERNET CITATION, 2005, XP007901589, Gefunden im Internet: URL:http://www.busch-jaeger.com/pdf/0939_C ontrolpanel_3_05.pdf [gefunden am 2007-01-23]

## Beschreibung

Die vorliegende Erfindung betrifft ein System zur Energieversorgung und Steuerung einer Mehrzahl von intelligenten Antrieben von Flügeln von Fenstern, Lüftungsklappen, Türen und/oder dergleichen.

Antriebe von Flügeln von Fenstern, Lüftungsklappen, Türen und/oder dergleichen werden zunehmend als intelligente Antriebe mit integrierter Steuerungselektronik ausgeführt und über ein Bussystem miteinander vernetzt, so dass die Antriebe untereinander kommunizieren können. Im Gegensatz zu herkömmlichen Fensterantrieben mit zugeordneten Umschaltern, über die an die Fensterantriebe nur solange eine Spannung angelegt wird, wie diese öffnen oder schließen, muss an die intelligenten Fensterantriebe bisher permanent eine Spannung angelegt werden, da sie auch im Bereitschaftsbetrieb ständig in der Lage sein müssen, über das zugeordnete Bussystem Telegramme von Sensoren, Tastern oder dergleichen zu empfangen. Dabei benötigt ein jeweiliger Fensterantrieb im Bereitschaftsbetrieb bisher einen Strom im Bereich von etwa 15 bis 20 mA. Die dadurch anfallenden Stromkosten sind beträchtlich, zumal häufig die Antriebe einer Vielzahl von Fenstern miteinander vernetzt sind und ein jeweiliges Fenster für dessen Betätigung, Verriegelung usw. in der Regel auch mehrere Antriebe aufweisen kann.

Die DE102013201471A1 beschreibt eine Verfahren zum Betreiben eines elektronischen LIN Steuerungsbusses, der einen Master und mindestens einen Slave umfasst, wobei der Slave in den Betriebsständen Wach-Zustand, Schlaf-Zustand und Stille-Zustand geschaltet werden kann.

Der Erfindung liegt die Aufgabe zugrunde, ein System der eingangs genannten Art anzugeben, bei dem der Verbrauch elektrischer Energie unter Gewährleistung eines zuverlässigen Betriebs auf ein Minimum reduziert wird.

Erfindungsgemäß wird die Aufgabe durch ein System mit den Merkmalen des Anspruchs 1 gelöst. Bevorzugte Ausführungsformen des erfindungsgemäßen Systems ergeben sich aus den Unteransprüchen, der vorliegenden Beschreibung sowie der Zeichnung.

Das erfindungsgemäße System zur Energieversorgung und Steuerung einer Mehrzahl von intelligenten Antrieben von Flügeln von Fenstern, Lüftungsklappen, Türen und/oder dergleichen, die jeweils mit einer integrierten Steuerungselektronik versehen und über wenigstens einen Bus miteinander vernetzt sind, über den die Antriebe untereinander kommunizieren können und an den Sensoren, Taster und/oder dergleichen angeschlossen sind, zeichnet sich dadurch aus, dass den Antrieben, Sensoren, Tastern und/oder dergleichen wenigstens eine insbesondere gemeinsame elektrische Energieversorgungseinheit zugeordnet ist und die intelligenten, miteinander vernetzten Antriebe zur Senkung des Energieverbrauchs im Bereitschaftsbetrieb in einen Schlafmodus schaltbar oder vollständig von der elektrischen Energieversorgung trennbar sind und über die Sensoren, Tasten und/oder dergleichen wieder geweckt werden können bzw. wieder mit der elektrischen Energieversorgungseinheit verbindbar sind.

Aufgrund dieser Ausbildung wird der Verbrauch elektrischer Energie unter Gewährleistung eines zuverlässigen Betriebs auf ein Minimum reduziert. Werden die intelligenten Antriebe im Bereitschaftsbetrieb in einen Schlafmodus geschaltet, so können sie durch entsprechende Telegramme von den Sensoren, Tastern oder dergleichen wieder geweckt werden. Werden die intelligenten Antriebe im Bereitschaftsbetrieb vollständig von der elektrischen Energieversorgungseinheit getrennt, so können sie über die Sensoren, Taster und/oder dergleichen wieder mit der elektrischen Energieversorgungseinheit verbunden werden.

Im letzteren Fall können die intelligenten, miteinander vernetzten Antriebe insbesondere über wenigstens eine durch die Sensoren, Taster und/oder dergleichen ansteuerbare Schalteinheit vollständig von der elektrischen Energieversorgungseinheit trennbar und mit dieser wieder verbindbar sein. Dabei kann die wenigstens eine Schalteinheit durch ein entsprechendes Telegramm der Sensoren, Taster und/oder dergleichen wieder geweckt werden, um die intelligenten Antriebe wieder mit der Energieversorgungseinheit zu verbinden.

Gemäß einer zweckmäßigen praktischen Ausführungsform des erfindungsgemäßen Systems sind die intelligenten, miteinander vernetzten Antriebe über mehrere durch die Sensoren, Taster und/oder dergleichen ansteuerbare, jeweils wenigstens einem intelligenten Antrieb zugeordnete Schalteinheiten vollständig von der elektrischen Energieversorgung trennbar und mit dieser wieder verbindbar. Dabei sind die Antriebe über die Schalteinheiten bevorzugt sowohl mit der elektrischen Energieversorgungseinheit verbindbar als auch mit dem Bus verbunden. Von Vorteil ist insbesondere auch, wenn die Schalteinheiten unmittelbar vor dem jeweils zugeordneten wenigstens einen intelligenten Antrieb angeordnet sind.

Gemäß einer alternativen vorteilhaften Ausführungsform des erfindungsgemäßen Systems sind die intelligenten, miteinander vernetzten Antriebe einer gesamten Linie über nur eine durch die Sensoren, Taster und/oder dergleichen ansteuerbare Schalteinheit vollständig von der elektrischen Energieversorgungseinheit trennbar und mit dieser wieder verbindbar. Dabei ist die Schalteinheit bevorzugt sowohl mit dem Bus als auch zu deren Versorgung mit elektrischer Energie mit der elektrischen Energieversorgungseinheit verbunden.

Die elektrische Energieeinheit kann insbesondere ein Netzteil umfassen. Durch ein solches Netzteil kann eine an die jeweiligen Antriebe angepasste Spannung bereitgestellt werden.

Die Sensoren, Taster und/oder dergleichen sind bevorzug auch während des Bereitschaftsbetriebs der intelligenten Antriebe mit der elektrischen Energieversorgungseinrichtung verbunden. Die von den Sensoren, Tastern und/oder dergleichen erzeugten Telegramme können über den Bus an die intelligenten Antriebe übertragen werden. Über denselben Bus können die Antriebe insbesondere auch untereinander kommunizieren.

Die intelligenten Antriebe, Sensoren, Taster und/oder dergleichen können zu deren Versorgung mit elektrischer Energie insbesondere über vom Bus getrennte Versorgungsleitungen mit der elektrischen Energieversorgungseinrichtung verbindbar bzw. verbunden sein. In bestimmten Fällen ist es jedoch auch von Vorteil, wenn die intelligenten Antriebe, Sensoren, Taster und/oder dergleichen zu deren Versorgung mit elektrischer Energie über im Bus integrierte Versorgungsleitungen mit der elektrischen Energieversorgungseinrichtung verbindbar bzw. verbunden sind.

Gemäß einer bevorzugten praktischen Ausführungsform des erfindungsgemäßen Systems sind die intelligenten Antriebe zu Gruppen von jeweils wenigstens zwei intelligenten Antrieben zusammengefasst. Dabei können die zu Gruppen von jeweils wenigstens zwei intelligenten Antrieben zusammengefassten intelligenten Antriebe zur Senkung des Energieverbrauchs im Bereitschaftsbetrieb insbesondere gruppenweise in einen Schlafmodus schaltbar oder vollständig von der elektrischen Energieversorgungseinheit trennbar sein und über die Sensoren, Taster und/oder dergleichen wieder geweckt werden bzw. wieder mit der elektrischen Energieversorgungseinheit verbindbar sein.

Gemäß einer weiteren zweckmäßigen praktischen Ausführungsform des erfindungsgemäßen Systems sind die verschiedenen intelligenten Antriebe bzw. Gruppen von intelligenten Antrieben und/oder die diesen zugeordnete wenigstens eine Schalteinheit über den Bus selektiv ansteuerbar. Dabei können die verschiedenen intelligenten Antriebe bzw. Gruppen von intelligenten Antrieben und/oder die diesen zugeordnete wenigstens eine Schalteinheit insbesondere mittels eines jeweiligen Adresscodes über den Bus selektiv ansteuerbar sein.

Von den intelligenten Antrieben kann beispielsweise einer als Master und die anderen als Slaves betrieben werden. Es sind beispielsweise auch solche Ausführungen denkbar, bei denen der Bus über eine Schnittstelle mit einer zentralen Steuerungseinheit verbindbar ist.

Die Erfindung wird im Folgenden anhand von Ausführungsbeispielen unter Bezugnahme auf die Zeichnung näher erläutert; in dieser zeigen:
- Fig. 1: eine schematische Darstellung einer beispielhaften Ausführungsform eines erfindungsgemäßen Systems zur Energieversorgung und Steuerung einer Mehrzahl von intelligenten Antrieben von Flügeln von Fenstern, Lüftungsklappen, Türen und/oder dergleichen,
- Fig. 2: eine schematische Darstellung einer weiteren beispielhaften Ausführungsform eines erfindungsgemäßen Systems mit mehreren Schalteinheiten und
- Fig. 3: eine schematische Darstellung einer weiteren beispielhaften Ausführungsform eines erfindungsgemäßen Systems mit nur einer Schalteinheit für eine gesamte Linie von angetriebenen Flügeln.

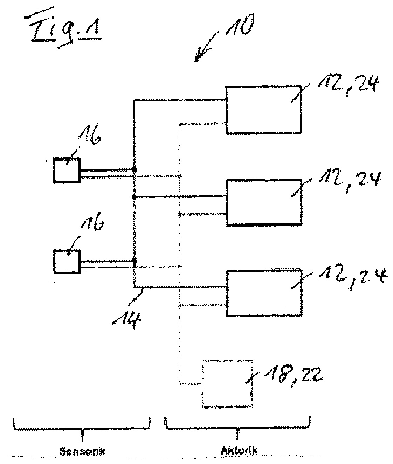

Die Fig. 1 bis 3 zeigen beispielhafte unterschiedliche Ausführungsformen eines erfindungsgemäßen Systems 10 zur Energieversorgung und Steuerung einer Mehrzahl von intelligenten Antrieben 12 von Flügeln von Fenstern, Lüftungsklappen, Türen und/oder dergleichen.

Die jeweils mit einer integrierten Steuerungselektronik versehenen intelligenten Antriebe 12 sind über wenigstens einen Bus miteinander vernetzt, über den sie untereinander kommunizieren können. An dem Bus 14 sind Sensoren, Taster 16 und/oder dergleichen angeschlossen, über die die Antriebe 12 ansteuerbar sind. Den Antrieben 12, Sensoren, Tastern 16 und/oder dergleichen ist wenigstens eine insbesondere gemeinsame elektrische Energieversorgungseinheit 18 zugeordnet.

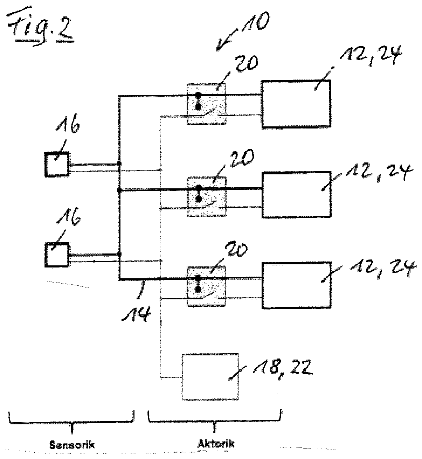

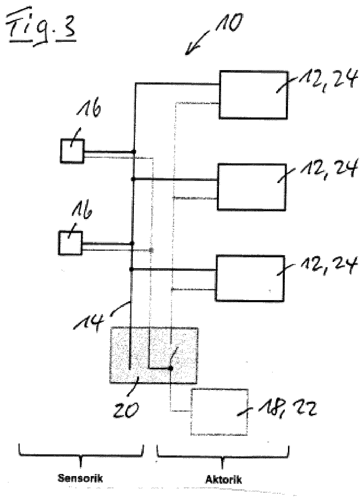

Die intelligenten, miteinander vernetzten Antriebe 12 sind zur Senkung des Energieverbrauchs im Bereitschaftsbetrieb in einen Schlafmodus schaltbar (vgl. Fig. 1) oder vollständig von der elektrischen Energieversorgungseinheit 18 trennbar (vgl. Fig. 2 und 3), wobei sie über die Sensoren, Taster 16 und/oder dergleichen wieder geweckt werden können bzw. wieder mit der elektrischen Energieversorgungseinheit 18 verbindbar sind.
Im letzteren Fall können die intelligenten, miteinander vernetzten Antriebe 12 insbesondere über wenigstens eine durch die Sensoren, Taster 16 und/oder dergleichen ansteuerbare Schalteinheit 20 vollständig von der elektrischen Energieversorgungseinheit 18 trennbar und mit dieser wiederverbindbar sein (vgl. Fig. 2 und 3).

Bei einem Beispiel gemäß Fig. 1 sind die intelligenten, miteinander vernetzten Antriebe 12 zur Senkung des Energieverbrauchs im Bereitschaftsbetrieb in einen Schlafmodus schaltbar, wobei sie durch entsprechende, über den Bus 14 übertragbare Telegramme von den Sensoren, Tastern 16 und/oder dergleichen wieder geweckt werden können. Bei der Ausführungsform gemäß Fig. 2 sind die intelligenten, miteinander vernetzten Antriebe 12 über mehrere durch die Sensoren, Taster 16 und/oder dergleichen ansteuerbare, jeweils wenigstens einem intelligenten Antrieb 12 zugeordnete Schalteinheiten 20 vollständig von der elektrischen Energieversorgungseinheit 18 trennbar und mit dieser wieder verbindbar. Dabei sind die Antriebe 12 über die Schalteinheiten 20 sowohl mit der elektrischen Energieversorgungseinheit 18 verbindbar als auch mit dem Bus 14 verbunden. Wie anhand der Fig. 2 zu erkennen ist, können die Schalteinheiten 20 insbesondere unmittelbar vor dem jeweils zugeordneten wenigstens einen intelligenten Antrieb 12 angeordnet sein.

Fig. 3 zeigt eine beispielhafte Ausführungsform des erfindungsgemäßen Systems 10, bei dem die intelligenten, miteinander vernetzten Antriebe 12 einer gesamten Linie von Flügeln über nur eine durch die Sensoren, Taster 16 und/oder dergleichen ansteuerbare Schalteinheit 20 vollständig von der elektrischen Energieversorgungseinheit 18 trennbar und mit dieser wieder verbindbar sind. Dabei ist die Schalteinheit 20 sowohl mit dem Bus 14 als auch zu deren Versorgung mit elektrischer Energie mit der elektrischen Energieversorgungseinheit 18 verbunden. Im vorliegenden Fall können somit über die eine Schalteinheit 20 alle intelligenten Antriebe der Linie von der elektrischen Energieversorgungseinheit 18 getrennt werden. Durch entsprechende, über den Bus 14 übertragbare Telegramme der Sensoren, Taster 16 und/oder dergleichen kann die Schalteinheit 20 wieder geweckt werden, um die intelligenten Antriebe 12 wieder mit der elektrischen Energieversorgung 18 zu verbinden.

Die elektrische Energieversorgungseinheit 18 der verschiedenen Ausführungsformen des Systems 10 kann beispielsweise ein Netzteil 22 umfassen, das die für die intelligenten Antriebe 12, die Sensoren, Taster 16 und/oder dergleichen und gegebenenfalls die wenigstens eine Schalteinheit 20 jeweils geeignete Spannung liefert. Dabei können die Sensoren, Taster 16 und/oder dergleichen insbesondere auch während des Bereitschaftsbetriebs der intelligenten Antriebe 12 mit der elektrischen Versorgungseinrichtung 18 verbunden sein.

Bei den verschiedenen Ausführungsformen des Systems 10 können die intelligenten Antriebe 12, Sensoren, Taster 16 und/oder dergleichen zu deren Versorgung mit elektrischer Energie über vom Bus 14 getrennte Versorgungsleitungen oder über im Bus 14 integrierte Versorgungsleitungen mit der elektrischen Energieversorgungseinrichtung 18 verbindbar bzw. verbunden sein.

Die intelligenten Antriebe 12 können insbesondere auch zu Gruppen 24 von jeweils wenigstens zwei intelligenten Antrieben 12 zusammengefasst sein. Dabei können die zu Gruppen 24 von jeweils wenigstens zwei intelligenten Antrieben 12 zusammengefassten intelligenten Antriebe 12 zur Senkung des Energieverbrauchs im Bereitschaftsbetrieb gruppenweise in einen Schlafmodus schaltbar oder vollständig von der elektrischen Energieversorgungseinheit 18 trennbar sein, wobei sie über die Sensoren, Taster 16 und/oder dergleichen wieder geweckt werden können bzw. wieder mit der elektrischen Energieversorgungseinheit 18 verbindbar sind.

Die verschiedenen intelligenten Antriebe 12 bzw. Gruppen 24 von intelligenten Antrieben 12 und/oder die diesen zugeordnete wenigstens eine Schalteinheit 20 sind über den Bus 14 insbesondere selektiv ansteuerbar. Dabei sind die verschiedenen intelligenten Antriebe 12 bzw. Gruppen 24 von intelligenten Antrieben 12 und/oder die diesen zugeordnete wenigstens eine Schalteinheit 20 insbesondere mittels eines jeweiligen Adresscodes über den Bus 14 selektiv ansteuerbar.

Über eine entsprechende Schnittstelle kann der Bus 14 beispielsweise auch mit einer zentralen Steuerungseinheit verbindbar sein.

### Bezugszeichenliste

- 10: System
- 12: Antrieb
- 14: Bus
- 16: Sensor, Taster
- 18: elektrische Energieversorgungseinheit
- 20: Schalteinheit
- 22: Netzteil
- 24: Gruppe von Antrieben

## Patentansprüche

1. System (10) zur Energieversorgung und Steuerung einer Mehrzahl von intelligenten Antrieben (12) von Flügeln von Fenstern, Lüftungsklappen, Türen und/oder dergleichen, wobei die intelligenten Antriebe (12) jeweils mit einer integrierten Steuerungselektronik versehen und über wenigstens einen Bus (14) miteinander vernetzt sind, über den die Antriebe (12) untereinander kommunizieren können und an den Sensoren, Taster (16) und/oder dergleichen angeschlossenen sind, und den Antrieben (12), Sensoren, Tastern (16) und/oder dergleichen wenigstens eine insbesondere gemeinsame elektrische Energieversorgungseinheit zugeordnet ist, und wobei die intelligenten, miteinander vernetzten Antriebe zur Senkung des Energieverbrauchs im Bereitschaftsbetrieb vollständig von der elektrischen Energieversorgungseinheit (18) trennbar sind und über die Sensoren, Taster (16) und/oder dergleichen wieder geweckt werden können bzw. wieder mit der elektrischen Energieversorgungseinheit (18) verbindbar sind, **dadurch gekennzeichnet, dass** die intelligenten, miteinander vernetzten Antriebe (12) über wenigstens eine durch die Sensoren, Taster (16) und/oder dergleichen ansteuerbare Schalteinheit (20) vollständig von der elektrischen Energieversorgungseinheit (18) trennbar und mit dieser wieder verbindbar sind, wobei die Sensoren, Taster (16) und/oder dergleichen auch während des Bereitschaftsbetriebs der intelligenten Antriebe (12) mit der elektrischen Energieversorgungseinrichtung (18) verbunden sind.

2. System nach Anspruch 1, **dadurch gekennzeichnet , dass** die intelligenten, miteinander vernetzten Antriebe (12) über mehrere durch die Sensoren, Taster (16) und/oder dergleichen ansteuerbare, jeweils wenigstens einem intelligenten Antrieb (12) zugeordnete Schalteinheiten (20) vollständig von der elektrischen Energieversorgungseinheit (18) trennbar und mit dieser wieder verbindbar sind.

3. System nach Anspruch 2,
**dadurch gekennzeichnet, dass** die Antriebe (12) über die Schalteinheiten (20) sowohl mit der elektrischen Energieversorgungseinheit (18) verbindbar als auch mit dem Bus (14) verbunden sind.

4. System nach Anspruch 2 oder 3,
**dadurch gekennzeichnet, dass** die Schalteinheiten (20) unmittelbar vor dem jeweils zugeordneten wenigstens einen intelligenten Antrieb (12) angeordnet sind.

5. System nach Anspruch 1,
**dadurch gekennzeichnet, dass** die intelligenten, miteinander vernetzten Antriebe (12) einer gesamten Linie über nur eine durch die Sensoren, Taster (16) und/oder dergleichen ansteuerbare Schalteinheit (20) vollständig von der elektrischen Energieversorgungseinheit (18) trennbar und mit dieser wieder verbindbar sind.

6. System nach Anspruch 5,
**dadurch gekennzeichnet, dass** die Schalteinheit (20) mit dem Bus (14) und zu deren Versorgung mit elektrischer Energie mit der elektrischen Energieversorgungseinheit (18) verbunden ist.

7. System nach zumindest einem der vorstehenden Ansprüche,
**dadurch gekennzeichnet, dass** die elektrische Energieversorgungseinheit (18) ein Netzteil (22) umfasst.

8. System nach zumindest einem der vorstehenden Ansprüche,
**dadurch gekennzeichnet, dass** die intelligenten Antriebe (12), Sensoren, Taster (16) und/oder dergleichen zu deren Versorgung mit elektrischer Energie über vom Bus (14) getrennte Versorgungsleitungen mit der elektrischen Energieversorgungseinrichtung (18) verbindbar bzw. verbunden sind.

9. System nach einem der Ansprüche 1 bis 7,
**dadurch gekennzeichnet, dass** die intelligenten Antriebe (12), Sensoren, Taster (16) und/oder dergleichen zu deren Versorgung mit elektrischer Energie über im Bus (14) integrierte Versorgungsleitungen mit der elektrischen Energieversorgungseinrichtung (18) verbindbar bzw. verbunden sind.

10. System nach zumindest einem der vorstehenden Ansprüche,
**dadurch gekennzeichnet, dass** die intelligenten Antriebe (12) zu Gruppen (24) von jeweils wenigstens zwei intelligenten Antrieben (12) zusammengefasst sind.

11. System nach Anspruch 10,
**dadurch gekennzeichnet, dass** die zu Gruppen (24) von jeweils wenigstens zwei intelligenten Antrieben (12) zusammengefassten intelligenten Antriebe (12) zur Senkung des Energieverbrauchs im Bereitschaftsbetrieb gruppenweise vollständig von der elektrischen Energieversorgungseinheit (18) trennbar sind und über die Sensoren, Taster (16) und/oder dergleichen wieder mit der elektrischen Energieversorgungseinheit (18) verbindbar sind.

12. System nach zumindest einem der vorstehenden Ansprüche,
**dadurch gekennzeichnet, dass** die verschiedenen intelligenten Antriebe (12) bzw. Gruppen (24) von intelligenten Antrieben (12) und/oder die diesen zugeordnete wenigstens eine Schalteinheit (20) über den Bus (14) selektiv ansteuerbar sind.

13. System nach Anspruch 12,
**dadurch gekennzeichnet, dass** die verschiedenen intelligenten Antriebe (12) bzw. Gruppen (24) von intelligenten Antrieben (12) und/oder die diesen zugeordnete wenigstens eine Schalteinheit (20) mittels eines jeweiligen Adresscodes über den Bus (14) selektiv ansteuerbar sind.

14. System nach zumindest einem der vorstehenden Ansprüche,
**dadurch gekennzeichnet, dass** der Bus (14) über eine Schnittstelle mit einer zentralen Steuerungseinheit verbindbar ist.

## Claims

1. System (10) for supplying energy to and controlling a plurality of intelligent drives (12) of window casements, ventilation flaps, doors and/or the like, wherein the intelligent drives (12) are each provided with integrated control electronics and are networked to one another via at least one bus (14), via which the drives (12) can communicate with one another and are connected to the sensors, buttons (16) and/or the like, and at least one electrical energy supply unit, in particular a common electrical energy supply unit, is assigned to the drives (12), sensors, buttons (16) and/or the like, and wherein the intelligent drives networked to one another can be completely disconnected from the electrical energy supply unit (18) in order to reduce the energy consumption in the standby mode and can be woken up again and can be connected to the electrical energy supply unit (18) again via the sensors, buttons (16) and/or the like, **characterized in that** the intelligent drives (12) networked to one another can be completely disconnected from the electrical energy supply unit (18) and can be connected to the latter again via at least one switching unit (20) which can be controlled by the sensors, buttons (16) and/or the like, wherein the sensors, buttons (16) and/or the like are also connected to the electrical energy supply device (18) during the standby mode of the intelligent drives (12).

2. System according to Claim 1,
**characterized in that** the intelligent drives (12) networked to one another can be completely disconnected from the electrical energy supply unit (18) and be connected to the latter again via a plurality of switching units (20) which can be controlled by the sensors, buttons (16) and/or the like and are each assigned to at least one intelligent drive (12).

3. System according to Claim 2,
**characterized in that** the drives (12) are both connectable to the electrical energy supply unit (18) and connected to the bus (14) via the switching units (20).

4. System according to Claim 2 or 3,
**characterized in that** the switching units (20) are arranged immediately upstream of the respectively assigned at least one intelligent drive (12).

5. System according to Claim 1,
**characterized in that** the intelligent drives (12) networked to one another in a complete line can be completely disconnected from the electrical energy supply unit (18) and can be connected to the latter again via only one switching unit (20) which can be controlled by the sensors, buttons (16) and/or the like.

6. System according to Claim 5,
**characterized in that** the switching unit (20) is connected to the bus (14) and, in order to be supplied with electrical energy, is connected to the electrical energy supply unit (18).

7. System according to at least one of the preceding claims,
**characterized in that** the electrical energy supply unit (18) comprises a power supply unit (22).

8. System according to at least one of the preceding claims,
**characterized in that**, in order to be supplied with electrical energy, the intelligent drives (12), sensors, buttons (16) and/or the like can be connected or are connected to the electrical energy supply device (18) via supply lines which are separate from the bus (14).

9. System according to one of Claims 1 to 7,
**characterized in that**, in order to be supplied with electrical energy, the intelligent drives (12), sensors, buttons (16) and/or the like can be connected or are connected to the electrical energy supply device (18) via supply lines integrated in the bus (14).

10. System according to at least one of the preceding claims,
**characterized in that** the intelligent drives (12) are combined to form groups (24) of at least two intelligent drives (12) in each case.

11. System according to Claim 10,
**characterized in that** the intelligent drives (12) combined to form groups (24) of at least two intelligent drives (12) in each case can be completely disconnected in groups from the electrical energy supply unit (18) in order to reduce the energy consumption in the standby mode and can be connected to the electrical energy supply unit (18) again via the sensors, buttons (16) and/or the like.

12. System according to at least one of the preceding claims,
**characterized in that** the different intelligent drives (12) or groups (24) of intelligent drives (12) and/or the at least one switching unit (20) assigned thereto can be selectively controlled via the bus (14).

13. System according to Claim 12,
**characterized in that** the different intelligent drives (12) or groups (24) of intelligent drives (12) and/or the at least one switching unit (20) assigned thereto can be selectively controlled by means of a respective address code via the bus (14) .

14. System according to at least one of the preceding claims,
**characterized in that** the bus (14) can be connected to a central control unit via an interface.

## Revendications

1. Système (10) d'alimentation en énergie et de commande d'une pluralité de mécanismes d'entraînement (12) intelligents de battants de fenêtres, de clapets d'aération, de portes et/ou similaires, les mécanismes d'entraînement (12) intelligents étant respectivement pourvus d'une électronique de commande intégrée et étant reliés les uns aux autres en réseau par le biais d'au moins un bus (14) par le biais duquel les mécanismes d'entraînement (12) peuvent communiquer entre eux et auquel sont connectés des capteurs, des palpeurs (16) et/ou similaire, et au moins une unité d'alimentation en énergie électrique notamment commune étant associée aux mécanismes d'entraînement (12), aux capteurs, aux palpeurs (16) et/ou similaire, et les mécanismes d'entraînement intelligents reliés les uns aux autres en réseau pouvant être entièrement déconnectés de l'unité d'alimentation en énergie électrique (18) en vue de réduire la consommation d'énergie en mode de veille et pouvant être réactivés et/ou pouvant être reconnectés à l'unité d'alimentation en énergie électrique (18) par le biais des capteurs, palpeurs (16) et/ou similaire,
**caractérisé en ce que** les mécanismes d'entraînement (12) intelligents reliés les uns aux autres en réseau peuvent être entièrement déconnectés de l'unité d'alimentation en énergie électrique (18) et reconnectés à celle-ci par le biais d'au moins une unité de commutation (20) commandable par les capteurs, palpeurs (16) et/ou similaire, les capteurs, palpeurs (16) et/ou similaire étant également reliés à l'unité d'alimentation en énergie électrique (18) pendant le mode veille des mécanismes d'entraînement (12) intelligents.

2. Système selon la revendication 1, **caractérisé en ce que** les mécanismes d'entraînement (12) intelligents reliés les uns aux autres en réseau peuvent être entièrement déconnectés de l'unité d'alimentation en énergie électrique (18) et reconnectés à celle-ci par le biais de plusieurs unités de commutation (20) commandables par les capteurs, palpeurs (16) et/ou similaire, respectivement associées à un mécanisme d'entraînement (12) intelligent.

3. Système selon la revendication 2, **caractérisé en ce que** les mécanismes d'entraînement (12), par le biais des unités de commutation (20), peuvent à la fois être reliés à l'unité d'alimentation en énergie électrique (18) et sont connectés au bus (14).

4. Système selon la revendication 2 ou 3, **caractérisé en ce que** les unités de commutation (20) sont disposées directement avant l'au moins un mécanisme d'entraînement (12) intelligent respectivement associé.

5. Système selon la revendication 1, **caractérisé en ce que** les mécanismes d'entraînement (12) intelligents reliés les uns aux autres en réseau d'une ligne complète peuvent être entièrement déconnectés de l'unité d'alimentation en énergie électrique (18) et reconnectés à celle-ci par le biais d'une seule unité de commutation (20) commandable par les capteurs, palpeurs (16) et/ou similaire, respectivement associées à un mécanisme d'entraînement (12) intelligent.

6. Système selon la revendication 5, **caractérisé en ce que** l'unité de commutation (20) est reliée au bus (14) et à l'unité d'alimentation en énergie électrique (18) en vue de son alimentation en énergie électrique.

7. Système selon au moins l'une des revendications précédentes, **caractérisé en ce que** l'unité d'alimentation en énergie électrique (18) possède un adaptateur secteur (22).

8. Système selon au moins l'une des revendications précédentes, **caractérisé en ce que** les mécanismes d'entraînement (12) intelligents, les capteurs, palpeurs (16) et/ou similaire peuvent être reliés ou sont reliés à l'unité d'alimentation en énergie électrique (18) par le biais de lignes d'alimentation séparées du bus (14) en vue de leur alimentation en énergie électrique.

9. Système selon l'une des revendications 1 à 7, **caractérisé en ce que** les mécanismes d'entraînement (12) intelligents, les capteurs, palpeurs (16) et/ou similaire peuvent être reliés ou sont reliés à l'unité d'alimentation en énergie électrique (18) par le biais de lignes d'alimentation intégrées dans le bus (14) en vue de leur alimentation en énergie électrique.

10. Système selon au moins l'une des revendications précédentes, **caractérisé en ce que** les mécanismes d'entraînement (12) intelligents sont rassemblés en groupes (24) respectifs d'au moins deux mécanismes d'entraînement (12) intelligents.

11. Système selon la revendication 10, **caractérisé en ce que** les mécanismes d'entraînement (12) intelligents rassemblés en groupes (24) respectifs d'au moins deux mécanismes d'entraînement (12) intelligents peuvent être entièrement déconnectés de l'unité d'alimentation en énergie électrique (18) en vue de réduire la consommation d'énergie en mode de veille et peuvent être reconnectés à l'unité d'alimentation en énergie électrique (18) par le biais des capteurs, palpeurs (16) et/ou similaire.

12. Système selon au moins l'une des revendications précédentes, **caractérisé en ce que** les différents mécanismes d'entraînement (12) intelligents ou groupes (24) de mécanismes d'entraînement (12) intelligents et/ou l'au moins une unité de commutation (20) qui leur est associée peuvent être commandé sélectivement par le biais du bus (14).

13. Système selon la revendication 12, **caractérisé en ce que** les différents mécanismes d'entraînement (12) intelligents ou groupes (24) de mécanismes d'entraînement (12) intelligents et/ou l'au moins une unité de commutation (20) qui leur est associée peuvent être commandé sélectivement par le biais du bus (14) au moyen d'un code d'adresse respectif.

14. Système selon au moins l'une des revendications précédentes, **caractérisé en ce que** le bus (14) peut être connecté à une unité de commande centrale par le biais d'une interface.
